# EUROPÄISCHE PATENTSCHRIFT

(11) **EP 2 052 828 B1**
(45) Veröffentlichungstag und Bekanntmachung des Hinweises auf die Patenterteilung: **12.01.2011**
(21) Anmeldenummer: 08167364.2
(22) Anmeldetag: 23.10.2008
(51) Int. Cl.: B29B 17/00, B29B 17/02

(54) **Poröse Schallschutzschwerfolien, Schallschutzsystem und Verfahren zur Herstellung einer porösen Schallschutzschwerfolie**
Porous heavy acoustic protection films, acoustic protection system and method for producing a porous heavy acoustic protection film
Feuille pesante poreuse insonorisée, système d'insonorisation et procédé de fabrication d'une feuille pesante poreuse insonorisée

(30) Priorität: 23.10.2007 EP 07020657; 09.11.2007 EP 07120356
(43) Veröffentlichungstag der Anmeldung: 29.04.2009
(73) Patentinhaber: Retro-Flex AG, 9487 Bendern (LI)
(72) Erfinder: Braendle, Josef, 6700 Bludenz (AT); Schwarz, Herwig J., 92224 Amberg (DE)
(74) Vertreter: Kaminski Harmann

(56) Entgegenhaltungen:
- DE-A1- 1 940 838
- DE-A1- 10 101 112
- DE-A1- 19 540 366
- DE-B3-102006 005 369
- DE-U1-202004 012 192
- GB-A- 2 245 570

## Beschreibung

Die Erfindung betrifft eine poröse Schallschutzschwerfolie, ein planes oder verformtes Schallschutzsystem aus einer porösen Schallschutzschwerfolie und einer damit verbundenen weichen Federschicht mit schallabsorbierenden Eigenschaften sowie ein Verfahren zur Herstellung einer porösen Schallschutzschwerfolie.

Die deutsche Gebrauchsmusterschrift DE 20 2004 012 192 offenbart eine poröse Schalldämmeinlageplatte gemäss dem Oberbegriff des Anspruchs 1. Die dort beschriebene poröse Schalldämmeinlageplatte ist von dünnflüssigem Harz durchströmt, wobei schmale Stege aus hartem Harz die Granulatteilchen miteinander verbinden.

Schalldämmplatten und Schalldämmformteile, die sich aus einer Kunststoffschwerfolie aus viskoelastischen Kunststoffen mit einer Dicke von insbesondere 0,5 mm bis 10 mm zusammensetzen, sind seit langem aus dem Stand der Technik bekannt und kommen insbesondere in den Bereichen des Fahrzeugbaus, der Bodenbelagsindustrie, der Bauindustrie, des Hochbaus sowie im Maschinenbau zur Schalldämmung zum Einsatz. Kunststoffschwerfolien, auch Schwerschichten oder schwere Deckschichten genannt, setzen sich vor allem aus thermoplastischen Polymeren, insbesondere PE (Polyethylen), EPDM (Ethylen-Propylen-Dien-Kautschuk) und/oder EVA (Ethylenvinylacetat), sowie mineralischen Füllstoffen, wie beispielsweise Kalksteinmehl bzw. Kalkspat (CaCO₃) und Schwerspat (BaSO₄) zusammen. Sie sind thermoplastisch beispielsweise im Tiefziehverfahren oder mittels Ziehpressen - verformbar und zeichnen sich durch hervorragende akustische schalldämmende Eigenschaften, hohe mechanische Festigkeit insbesondere gegen Bruch und Einreissen, Nicht- oder schwere Entflammbarkeit sowie gute chemische Beständigkeit aus.

Zur Reduzierung des Schallpegels in Kabinen und Innenräumen von Kraftfahrzeugen werden ungenügend schalldämmende Blechflächen der Trennwände mit schalldämmenden Matten oder Formteilen verkleidet, um in die Blechflächen von Motorseite und anderen Schallerzeugern eingeleitete Geräusche abzuhalten.

Dies geschieht meist mit Schwerfolien, welche die Masse der Trennwände und damit in einfacher Weise die Schalldämmung erhöhen. Bekanntlich bewirken Schwerfolien zwar aufgrund der erzielten Massenerhöhung insbesondere auf Blech eine sehr gute Schalldämmung, wegen ihrer Flexibilität, ihrer Kältebeständigkeit, ihres tiefen Erweichungsbereichs und ihrer Wärmefestigkeit weisen sie aber nur eine sehr geringe Dämpfung bzw. Körperschalldämpfung auf. Daher kommen oft so genannte Masse-Feder-Schichten aus Schwerfolien und weichen Federschichten aus Schaumstoffen, Faservliesmatten oder einer entsprechenden Federschicht-Hinterschäumung zum Einsatz, wobei die Federschicht zur Trennwand angeordnet ist. Mittels dieser Masse-Feder-Schichten kann eine höhere, aber dann meist frequenzabhängige Dämmung erreicht werden.

Die Patentschrift DE 10 2006 005 369 offenbart ein Verfahren zur Herstellung von schallabsorbierenden Formteilen, insbesondere zur Verwendung als Kraftfahrzeug-Stirnwandverkleidungen oder als Unterware für Kraftfahrzeug-Teppiche. Dabei wird ein Flächengebilde aus thermoplastischen Schmelzfasern, rezyklierten Schaumstoffteilchen und rezyklierten Schwerschichtteilchen auf eine Temperatur oberhalb des Schmelzpunktes der Schmelzfasern erhitzt und danach in einem Formwerkzeug mit Temperatur unterhalb des Schmelzpunktes der Schmelzfasern zu einem dreidimensionalen Formteil gepresst. Als Ergebnis dieses Verfahrens wird eine im Wesentlichen luftdichte, geschlossene Schwerschicht als Dämmschicht erzeugt.

Es ist zu unterscheiden zwischen der Schalldämmung und Schalldämpfung. Die Schalldämmung bezeichnet die Behinderung der Schallausbreitung von Luftschall und Körperschall insbesondere durch Schallreflexion des sich ausbreitenden Schalls und durch Massenerhöhung, beispielsweise durch klassische Schwerfolien, während unter der Schalldämpfung die Behinderung der Schallausbreitung durch Absorption von Schall verstanden wird. Bei der Schallabsorption oder Schalldämpfung wird die Schallenergie in Wärmeenergie umgewandelt und dementsprechend die Reflexion an einer Grenzfläche vermindert.

Die DE 19 40 838 aus dem Jahre 1969, veröffentlicht im Jahre 1971, beschreibt eine selbsttragende Kunststoffschwerfolie zur Verbesserung der Schalldämmung, welche verformbar und temperaturbeständig ist. Die selbsttragende thermoplastische Kunststoffschwerfolie, deren spezifisches Gewicht bei etwa 2,0 bis 2,5 g/cm liegt, ist insbesondere 1 bis 10 mm dick. Aufgrund ihres Gehaltes an thermoplastischen Polymeren lässt sich die Folie heiss verformen. Die Kunststoffschwerfolie eignet sich vor allem für Schalldämmzwecke, insbesondere im Kraftfahrzeugbau. Gemäss der Beschreibung enthält die Kunststoffschwerfolie etwa 10 bis 40 Gew.% von Äthylen/Vinylacetat-Mischpolymeren mit einem Vinylacetatgehalt von 10 bis 45, vorzugsweise 15 bis 30 Gew.% und etwa 60 bis 90 Gew.% anorganische Füllstoffe. Der erforderliche Vinylacetatgehalt kann dabei auch in der Weise erreicht werden, dass man zwei Mischpolymere mit unterschiedlichem Vinylacetatgehalt im geeigneten Verhältnis miteinander mischt. Als Füllstoffe finden vorzugsweise anorganische Materialien verhältnismässig hohen spezifischen Gewichts wie Russ, Schwerspat, Kreide, Glimmer oder Schiefermehl, oder Gemische dieser Materialien Verwendung. Zur Verbesserung der Verformbarkeit und zur Erhöhung der Kälteelastizität kann die Schwerfolie gegebenenfalls bis zu 10 Gew.% eines herkömmlichen Weichmachers, z.B. eines Phthalates wie Dioctylphthalat enthalten. Andererseits kann die Schwerfolie auch bis zu etwa 10 Gew.% eines Harzes, z.B. eines Phenolformaldehydharzes bzw. Phenolharzes enthalten, wenn es für einen bestimmten Einsatzzweck erwünscht ist, den Erweichungspunkt der Schwerfolie zu erhöhen. Trotz des relativ hohen Füllstoffanteils von bis zu 90 Gew.% wird ein Produkt erhalten, das nicht nur gute Form- und Temperaturbeständigkeit, sondern auch hohe Elastizität aufweist. Die beschriebene Kunststoffschwerfolie lässt sich gemäss der Beschreibung bei Temperaturen oberhalb 110°C nach den verschiedenen an sich bekannten Verfahren thermoplastisch verformen. Die Schrumpfung bei der Verformung ist äusserst gering und liegt maximal bei etwa 1 %. Beispielsweise kann die Verformung im Tiefziehverfahren erfolgen. Ein weiteres Verfahren, welches sich für bereits mit Dekormaterial wie Schutzfolien oder Trennvliese, mit Vliesmatten oder mit Schaumstoffplatinen kaschierte Schwerfolien bewährt hat, ist das Ziehpressen des Verbundteils unter Patrize und Matrize sowie optional zusätzlicher Tiefziehunterstützung. Die Formgebung orientiert sich dabei beispielsweise an der Form und Kontur des Karosserieteils, auf welches die geformte Matte später aufgebracht werden soll.

Die in der genannten deutschen Patentschrift beschriebene Kunststoffschwerfolie zeichnet sich durch sehr gute akustische, schalldämmende Eigenschaften, eine Formstabilität bis etwa 110°C gemäss der Beschreibung, hohe mechanische Festigkeit insbesondere gegen Bruch und Einreissen, Nicht-Entflammbarkeit sowie gute chemische Beständigkeit gegen Wasser, Salzwasser, verdünnte Säuren und Laugen sowie gegen öl und Benzin aus, so dass sie für eine Verwendung im Kraftfahrzeugbau besonders geeignet ist. Für eine Auskleidung von Motor- und Kofferraum sind ihre gute Temperaturbeständigkeit, insbesondere die Formstabilität im Bereich von etwa -40 bis +110°C sowie ihre chemische Widerstandsfähigkeit neben den hervorragenden Schalldämmeigenschaften von Bedeutung. Eine weitere Verbesserung der chemischen Eigenschaften kann dadurch erreicht werden, dass man die Aussenfläche der Kunststoffschwerfolie mit einer dünnen Polyamidfolie beschichtet oder mit einem Polyamidharz besprüht.

Die vorstehend beschriebene Kunststoffschwerfolie eignet sich nur bedingt für das direkte Aufbringen - durch Aufschmelzen oder Aufkleben - auf Blechteile im Kraftfahrzeug, weil sie ausser der Massenwirkung zur Schalldämmung kaum über schwingungsdämpfende Eigenschaften verfügt.

Diverse unterschiedliche Verfahren zur Herstellung von Kunststoffschwerfolien, kurz Schwerfolien, sind aus dem Stand der Technik bekannt, beispielsweise das Mischen in Mischknetern, z.B. einem Z-Schaufelkneter, oder in Fluidmischern, z.B. einer Heiz-Kühlmischer-Kombination, zur Zwischenstufe Granulat und weiter über Extruder, Breitschlitzdüse und Walzenstuhl zur Platine oder Endlosbahn, oder als kompakten Batch über Austragsschnecke und Walzwerk zu einer Kalanderanlage, sowie das Spritzgiessen.

Die heute im Fahrzeugbau zum Einsatz kommenden Schwerfolien haben im Wesentlichen die oben beschriebene Zusammensetzung, die auf thermoplastischen Polymeren und mineralischen Füllstoffen basiert. Die Art und der Anteil an Polymeren und mineralischen bzw. anorganischen Füllstoffen sowie der Anteil weiterer Bestandteile variiert jedoch in gewissem Maße, abhängig vom jeweiligen Einsatzgebiet der Schwerfolie.

Um den Schallpegel im Innenraum weiter zu mindern, werden - wie in der DE 32 15 244 bzw. der DE 32 19 339 oder der DE 33 13 001 beschrieben - offenporige oder mit dünnen Kunststoff-Häuten überzogene Absorberschäume oder Faservliesmatten eingebaut, die als Dämpfungsfolien zur Vibrationsminderung und Körperschalldämpfung wirken und daher oft auch zusätzlich mit den hauptsächlich schalldämmenden Schwerfolien zu Schallpaketen kombiniert werden.

Weiterhin werden auf dröhnende Blechflächen auch mit mineralischen Füllstoffen ausgerüstete Bitumenfolien aufgebracht, welche körperschalldämpfende Eigenschaften aufweisen, wie sie beispielsweise in der DE 30 34 848 beschrieben sind.

Die komplexe Minderung von Luft- und Körperschall sowie die Senkung des Raumpegels in Innenräumen wird durch ebenso komplexe, kombinierte Matten in oft mehreren Materialschichten praktisch nie mit einer einfachen Anordnung zur gleichzeitigen Schalldämmung und Luft- bzw. Körperschalldämpfung im Stand der Technik bewirkt.

In der DE 20 64 445 wird die in der DE 19 40 838 beschriebene Kunststoffschwerfolie weiter zu einem mehrschichtigen geformtem System mit einer Federschicht variabler Dicke aus Kunststoffschaum ausgerüstet.

In der DE 42 06 411 A1 wird ein System mehrerer Lagen aus Schwerschichten und Federschichten beschrieben. Die WO 98/18657 stellt ein mehrschichtiges System aus dichten und offenporigen Schichten als Montagepaket vor. Ähnlich beschreibt die DE 198 21 532 mehrere zusammengesetzte Schichten zur Erzielung von wärme- und schalldämmenden Eigenschaften.

Somit ist seit fast 40 Jahren ein Sandwichmaterial aus einer schweren Dämmfolie und einem damit einstückig verbundenen Schaumstoff oder einer Absorbervliesplatine zur Erhöhung der Schalldämmung dünner Bleche im Automobilbau bekannt und in vielen Varianten im Einsatz. Ein Masse-Feder-Sandwich dieser Art weist je nach Masse der schweren Deckschicht und Dicke sowie Art der Federschicht eine hohe Verbesserung der Schalldämmung auf Blechflächen auf, allerdings mit einem Schwachbereich im Umfeld der Masse-Feder Resonanz. Was eine Luftschallabsorption betrifft - in vielen Fällen bei Anwendung in kleinen Kabinen oder Fahrgasträumen erwünscht - ist diese bisher kaum bekannt, denn die massive Dämmmatte absorbiert nicht.

Es ist daher Aufgabe der Erfindung, eine Schallschutzschwerfolie und ein einfach aufgebautes Schallschutzsystem der eingangs beschriebenen Gattung sowie ein entsprechendes Herstellungsverfahren zur Verfügung zu stellen, wobei die Schallschutzschwerfolie und das Schallschutzsystem jedoch neben der Schallisolation auch eine hohe Luftschalldämpfung bewirken.

Diese Aufgabe wird durch die Verwirklichung der Merkmale der unabhängigen Ansprüche gelöst. Merkmale, die die Erfindung in alternativer oder vorteilhafter Weise weiterbilden, sind den abhängigen Patentansprüchen zu entnehmen.

Die erfindungsgemässe poröse Schallschutzschwerfolie setzt sich im Wesentlichen aus teilweise thermisch ineinander geflossenen und verpressten, untereinander teilverschmolzenen, somit aneinanderhaftenden und durch die Teilverschmelzung untereinander Zwischenräume aufweisenden Schwerpartikeln zusammen.

Die Schwerpartikeln bestehen im Wesentlichen aus thermoplastischen Polymeren, insbesondere PE (Polyethylen), EPDM (Ethylen-Propylen-Dien-Kautschuk) und/oder EVA (Ethylenvinylacetat), und mineralischen Füllstoffen, insbesondere Kalksteinmehl bzw. Kalkspat (CaCO₃) und Schwerspat (BaSO₄). Der Anteil an Füllstoffen beträgt insbesondere 60 bis 90 Gew.% bzw. etwa 40 bis 60 Vol.%, im Speziellen 70 bis 85 Gew.% bzw. etwa 45 bis 55 Vol.%, während der Anteil an Polymeren etwa 10 bis 40 Gew.% bzw. 40 bis 60 Vol.%, im Speziellen 15 bis 30 Gew.% bzw. 45 bis 55 Vol.% beträgt. Teilweise enthalten die einzelnen Schwerpartikel zusätzlich Öl zum Quellen und zur besseren Aufnahme der Füllstoffe. Der Ölgehalt beträgt bis über 8 Vol.% bzw. 20 Vol.%. Eine Schwerfolie, aus welcher derartige stückige Schwerpartikel insbesondere durch Granulieren, Zerhacken oder Brechen herstellbar sind, wird in der DE 1940838 beschrieben.

Bevorzugt setzen sich die Inhaltsstoffe aus einem hohen mineralischen Anteil von 70 bis 80 Gew.% und einem Polymeranteil von ca. 30 bis 20 Ges.% zusammen. In einer speziellen Ausführungsform enthalten die Schwerpartikel etwa 10,5 Gew.% Schwerspat (bisO₄), etwa 62,5 Gew.% Kalkspat (CaCO₃), etwa 1,1 Gew.% Russ, etwa 4 Gew.% Mineralöl, etwa 0,4 Gew.% Zinkdistearat, etwa 11,5 Gew.% 1-Octen Polymer mit ethen und etwa 10 Gew.% PE (Polyethylen). Diese Inhaltsstoffe können jedoch je nach Rezeptur stark abweichen. Als Kalkspat (CaCO₃) eignet sich beispielsweise das Produkt "CALCIT MS 80" des Calcitwerk Schön + Hippelein GmbH + Co. KG. Als Schwerspat (BaSO₄) ist beispielsweise das Produkt "Schwerspat Mehl GRC-F" der Bassermann minerals GmbH geeignet. Das 1-Octen Polymer mit ethen ist z.B. das Produkt "ENGAGE 8150 Polyolefin Elastomer" von The Dow Chemical Company. Das Mineralöl ist insbesondere das Produkt "Pionier 1115" der Firma PIONIER.

Die geometrische Form der Partikel gleicht insbesondere der eines Granulats, Mahlguts oder Korns, ist also rundlich oder länglich, wobei die Partikelgrösse der teilverschmolzenen Schwerpartikel eine durch die Siebgröße bestimmbare Dimension aufweist. Ein bestimmter Anteil an Schwerpartikeln überschreitet eine bestimmte Siebgrösse, wird also von einer bestimmten Siebgrösse ausgesiebt. Diese bestimmte Siebgrösse, gemessen in Millimeter, ist um einen bestimmten Faktor grösser als die Dicke der porösen Schallschutzschwerfolie im Millimeter. Der Faktor beträgt 0,5, insbesondere 1, im Speziellen 1,5. Der bestimmte Anteil an Schwerpartikeln beträgt mindestens 25%, insbesondere mindestens 35%, insbesondere mindestens 50%, im Speziellen mindestens 75% der Gesamtmasse aller Schwerpartikel in der Schallschutzschwerfolie. In anderen Worten heisst das, dass bei Sieben aller Schwerartikel mit einem Sieb, das eine Siebweite, die dem Faktor 0,5 bzw. 1,0 bzw. 1,5 des Dicke der Schallschutzschwerfolie entspricht, aufweist, ein Anteil von grossen Schwerpartikeln ausgesiebt wird, wobei der Gewichtsanteil der ausgesiebten grossen Schwerpartikel mindestens 25% bzw. 35% bzw. 50% bzw. 75% des Gesamtgewichts der Schwerpartikel ausmacht.

In anderen Worten ist der Anteil an grossen Schwerpartikeln, deren Siebgrösse über die halbe Dicke der Schallschutzschwerfolie hinausgeht, verhältnismässig gross. Dies bewirkt aufgrund der Teilverschmelzung einen grossen Anteil an Zwischenräumen, die sich wiederum positiv auf das akustische Verhalten der Schallschutzschwerfolie auswirken.

Ein wesentlicher Vorteil der Verwendung von verhältnismässig grossen Partikeln besteht auch in den relativ geringen Herstellungskosten, da die Herstellung von grossen Schwerpartikeln, insbesondere mittels Mahlen, Granulieren, Schreddern oder Brechen einer Schwerfolie oder Schwerfolienplatte, mit einem geringen Aufwand verbunden ist als die Herstellung ausschliesslich kleiner Partikel.

Die Einstufung der Dimension einer Schwerfolie erfolgt im Stand der Technik vorzugsweise anhand der Dichte der Schwerfolie in kg/m². Versuche bei Verwendung von Schwerpartikel mit den oben genannten Anteilen an Inhaltsstoffe der speziellen Ausführungsform haben gezeigt, dass sich bei Einstellung folgender Dichtewerte folgende bevorzugte Dickenbereiche der hergestellten Schallschutzschwerfolie ergeben, wobei sich folgende Schwerpartikelgrössen als besonders vorteilhaft herausgestellt haben:

| **Dichte der Schallschutzschwerfolie** | **Dicke der Schallschutzschwerfolie** | **Siebweite der Schwerpartikel** |
|---|---|---|
| 1 kg/m² | 0,8 - 1,5 mm | 0 - 3 mm |
| 2 kg/m² | 1,5 - 2,5 mm | 0 - 5 mm |
| 4 kg/m² | 3,0 - 4,5 mm | 0 - 8 mm |
| 6 kg/m² | 4,0 - 6,5 mm | 0 - 8 mm |
| 8 kg/m² | 4,0 - 8,0 mm | 0 - 12 mm |
| 10 kg/m² | 6,0 - 10 mm | 0 - 15 mm |

Die Dicke der Schallschutzschwerfolie bei gleicher Dichte in kg/m² hängt von dem Ausmass der Verpressung der Schwerpartikel ab. Abhängig von der Verpressung werden unterschiedliche Dämpfungen und Dämmungen in zum Teil unterschiedlichen Frequenzbereichen erzielt. Dies bedeutet, dass die Schwerpartikel im Rahmen des im Folgenden genauer erläuterten Herstellungsverfahren gezielt zu einer bestimmten Schallschutzschwerfoliendicke unter Hitzeeinwirkung verpresst werden. Daraus resultieren auch der Stärkegrad der Porosität und in weiterer Folge die Dämpf- und Dämmwerte.

Unter der Vielzahl miteinander verbundener Schwerpartikel befinden sich herstellungsbedingt zwangsläufig auch Klein- und Kleinstpartikel, weshalb der Grössenbereich der verwendeten Schwerpartikel in obiger Tabelle stets mit 0 mm beginnt.

Die oben genannten Siebweiten dienen als Angabe für die Partikelgrössenbestimmung. Diese im Rahmen der Erfindung als Messgrösse verwendete Siebgrösse ist zu unterscheiden von der tatsächlichen Siebgrösse des bei der Siebung der Schwerpartikel im Herstellungsprozess verwendeten Siebs, das zur Grössenbegrenzung der Schwerpartikel dient. Auch wenn bewusst erfindungsgemäss auch grosse Schwerpartikel für die Herstellung der erfindungsgemässen Schallschutzschwerfolie verwendet werden, muss die Partikelgrösse auf einen oberen Wert begrenzt werden. Dies geschieht durch Siebung. Im Rahmen des Herstellungsprozesses werden die Partikel nur verhältnismässig gering plastisch verformt, jedoch wird das Gesamtgefüge der Partikel untereinander verändert, indem die dazwischen liegenden Freiräume drastisch verkleinert werden. Sind die zur Herstellung der Schallschutzschwerfolie verwendeten Schwerpartikel im Wesentlichen kugelförmig, ist eine kleinere Siebweite bei der tatsächlichen Siebung zu wählen, beispielsweise 0,5 bis 1 der Dicke der Schallschutzschwerfolie, als im Falle eher länglicher oder sogar fasriger Partikel, die sich durch Umschichtung leichter auf eine kleiner Dicke der Schallschutzschwerfolie fügen lassen. Im letzteren Fall ist eine tatsächliche Siebweite, die den 1 bis über 2-fachen Wert der Dicke der Schallschutzschwerfolie hat, ausreichend.

Die Schwerpartikel können aus einem eigens zur Herstellung der porösen Schallschutzschwerfolie hergestellten Schwerwerkstoff der eingangs genannten Art oder aus einem Recycling-Verfahrens, insbesondere auf der Grundlage des von der Anmelderin betriebenen Recycling-Verfahrens für Schwerfolienabfälle, angemeldet als europäische Patentanmeldung unter der Anmeldenummer 07020657.8, stammen.

Während die bekannten unbeschichteten Schallschutzschwerfolien hauptsächlich schalldämmende, jedoch nur bedingt schalldämpfende Eigenschaften aufweisen, zeichnet sich die erfindungsgemässe poröse Schallschutzschwerfolie durch hervorragende Schallabsorptionseigenschaften aus. Die für eine Schwerfolie ungewöhnlich ausgeprägte Absorption des Luftschalls geschieht aufgrund der Porosität des offenporigen Materials, das eine grosse innere Oberfläche aufweist. Durch Freilängen zwischen den einzelnen Schwerpartikeln findet zwischen den einzelnen, nur teilweise thermisch ineinander geflossenen und verpressten, untereinander nur teilverschmolzenen und durch die Teilverschmelzung untereinander Zwischenräume aufweisenden Schwerpartikel eine Art Dehnungsdämpfung bzw. Körperschalldämmung innerhalb der porösen Schallschutzschwerfolie statt. Während bei einer aus dem Stand der Technik bekannten kompakten, massiven Schwerfolie wie auch bei Blech eine Kraft- oder Schwingungseinleitung von einer zur anderen entfernten Stelle sofort ungedämpft bzw. ungedämmt weitergeleitet wird, ähnelt die poröse Schallschutzschwerfolie in ihrer Funktion einem weichen Gummilager, bei welchem der Schall nicht nur gedämmt wird, sondern auch Körperschall durch Schwingungsdämpfung gedämpft wird.

Die bereits hervorragenden akustischen Eigenschaften der erfindungsgemässen porösen Schallschutzschwerfolie lassen sich noch verbessern durch den Aufbau einer sogenannten Sandwichfolie in Form eines Schallschutzsystems.

Das plane oder verformte Schallschutzsystem weist die beschriebene erfindungsgemässe poröse Schallschutzschwerfolie und eine mit der Schallschutzschwerfolie verbundene, weiche, zusätzlich schallabsorbierende Federschicht auf, wobei das Schallschutzsystem sowohl schalldämmende Eigenschaften durch poröse Schallschutzschwerfolie als auch schallabsorbierende Eigenschaften durch die poröse Schallschutzschwerfolie und die Federschicht aufweist.

Überraschenderweise wurde festgestellt, dass die Kombination der erfindungsgemässen porösen Schallschutzschwerfolie mit einer an sich aus dem Stand der Technik bekannten Federschicht, wie sie bei herkömmlichen massiven Scherfolien zum Einsatz kommt, zu einer drastischen Erhöhung der Absorption führt. Versuche haben ergeben, dass durch Einsatz der porösen Schallschutzschwerfolie anstelle einer massiven Scherfolie in einem Schallschutzsandwichsystem bei gleicher Absorption eine Gewichtseinsparung von 50% und teilweise sogar bis zu 75% erzielbar ist. In anderen Worten ist kann bei identischem spezifischen Gewicht durch Ersetzen der massiven Schwerfolie durch die erfindungsgemässe poröse Schallschutzschwerfolie eine verstärkte Schalldämpfung von bis zu -10dB erzielt werden. Eine erfindungsgemässe poröse Schallschutzschwerfolie mit einer Flächenmasse von 4,5 kg/m² und 12 mm Schaumstofffeder in Sandwichbauweise erreicht im Hallraum - gemessen beim Fraunhofer IBP, Stuttgart - die Absorberwirkung einer hochwertigen 30 mm dicken Absorbermatte.

Somit sind erhebliche Gewichtseinsparungen beim Einsatz des erfindungsgemässen Schallschutzsystems insbesondere in Kraftfahrzeugen erzielbar.

In einer Weiterbildung der Erfindung besteht die poröse Schallschutzschwerfolie im Wesentlichen aus zu einer Folie verpressten Schwerpartikeln, die insbesondere von einem Rezyklat einer Kunststoffschwerfolie, das insbesondere mittels des Recycling-Verfahrens für Schwerfolienabfälle, angemeldet als europäische Patentanmeldung unter der Anmeldenummer 07020657.8, gebildet werden.

In einer weiteren Weiterbildung der Erfindung liegt die Größe der meisten Schwerpartikel, deren geometrische Form und die Verteilung der Partikelgröße bei der Herstellung der Schallschutzschwerfolie gesteuert werden, zwischen einer Siebgröße von 3 mm und 15 mm. Die Schwerpartikel bestehen alternativ oder zusätzlich zumindest teilweise aus einer eigens dafür gefertigten neuen Mischung von Bindermaterialien und mineralischen Füllstoffen und sind - insbesondere mittels eines Verfahrens wie Granulieren, Zerhacken oder Brechen - stückig hergestellt. Alternativ oder zusätzlich sind die schweren Partikel zumindest teilweise durch Zusatzpartikel sowohl aus Regenerat anderer Kunststoffe und Faserstoffe als auch Granulaten, Fasern und/oder Partikeln aus Kunststoff oder Naturstoffen wie Holzfasern mit und ohne Bindemittel ergänzt.

In einer weiteren Weiterbildung der Erfindung besteht die weiche Federschicht im Wesentlichen aus Schaumstoff, einem aufgeschäumten PUR-Kaltschaum oder einer planen oder geformten Vliesplatine, zum Beispiel aus Baumwoll- oder Polyestervlies.

Die Dicke der Federschicht beträgt insbesondere zwischen 1 bis 30 mm. Ist die Federschicht als Hinterschäumung zwischen der Schallschutzschwerfolie und der Gegenfläche, beispielsweise dem Blech, ausgebildet, kann Dicke der von der Hinterschäumung gebildeten Federschicht zum Teil auch an einzelnen Stellen über 200 mm betragen.

Die poröse Schallschutzschwerfolie ist insbesondere ein- oder beidseitig mit luftdurchlässigem Vliesmaterial kaschiert.

Das gesamte System kann nicht nur als plane Matte zu einer planen Platte verdichtet werden, sondern kann auch in einer Form zu einem passgenauen Formteil eingebracht und ausgeformt werden.

Die Anordnung von Zusammensetzung und Aufbau erfolgt vorzugsweise nach Ansprüchen der akustischen Optimierung.

Das neuartige als Sandwich-Matte ausgebildete Schallschutzsystem übernimmt in bekannter Weise und Umfang die Schallisolation der Masse-Feder-Anordnung, bietet aber überraschenderweise zusätzlich eine außerordentlich hohe Luftschalldämpfung, also Absorption durch bzw. über die Oberfläche der Schwermatte.

Der geschilderte Effekt wird durch Verwendung einer aus Schwerpartikeln, insbesondere neune oder Recyclingpartikeln, zusammengepressten Schallschutzschwerfolie erreicht, welche ein gewisses Maß an Porosität aufweist, um die Luftzirkulation nach dem Prinzip von Helmholtz zu ermöglichen.

Ein zweiter, mehrfach gemessener und bestätigter Effekt mit hoher Absorberwirkung ist der Eigenbewegung und damit Dämpfungswirkung der nur bedingt fest miteinander verbundenen Schwermaterial-Partikel zuzuschreiben. Durch die Erfindung ergibt sich eine Matrix von interessanten Lösungen von Absorberfunktion-Massedämmung - beides frequenzbezogen einstellbar - verbunden mit gezielter Gewichtseinsparung, wie die Messung beim Fraunhofer IBP Stuttgart bestätigt hat, bei welcher eine erfindungsgemässe poröse Schwerfolie mit 4,5 kg/m² Flächenmasse und einer 12 mm Schaumstofffederschicht mit einer hochwertigen 30 mm dicken Absorbermatte, welche die gleiche Absorberwirkung zeigte, verglichen wurden.

Auch die notwendigerweise geringere Zugfestigkeit der porösen Schallschutzschwerfolie im Vergleich zur massiven Schwerfolie ist - um einen Einsatz als vorgeformtes Bauteil zu gestatten durch geeignete Armierung mit textilen Non Woven Produkten auszugleichen. Auch eine Ausrüstung zur Erzeilung einer wasserundurchlässigen Deckschicht für einen Einsatz im Feuchtbereich ist möglich.

Da speziell in Fahrzeugkabinen der Einsatz luftschallabsorbierender Schallpakete aus Gewichtsgründen immer mehr zunimmt, ist diese duale Lösung von Dämmung und Dämpfung durch eine Sandwichanordnung wie bei dem erfindungsgemässen Schallschutzsystem von beträchtlicher Bedeutung.

Ausserdem umfasst die Erfindung ein Verfahren zur Herstellung der erfindungsgemässen porösen Schallschutzschwerfolie und des Schallschutzsystems.

In der EP 1 045 751 B1 und der DE 197 51 516 A1 wird ein Verfahren zur Herstellung von thermofixierten Bahnen aus thermoplastischen Polymer-Materialteilchen beschrieben. Überraschenderweise hat sich gezeigt, dass mittels des dort allgemein für thermoplastische Polymer-Materialteilchen beschriebenen Verfahrens aus Schwerpartikeln eine poröse Schallschutzschwerfolie mit den oben beschriebenen überraschenden schalldämpfenden Eigenschaften herstellbar ist.

Die Erfindung umfasst daher auch ein auf dem allgemeinen Verfahren der EP 1 045 751 B1 und der DE 197 51 516 A1 basierendes, weiterentwickeltes Verfahren zur Herstellung einer porösen Schallschutzschwerfolie aus - insbesondere von einem Schwerfoliengranulat gebildeten - Schwerpartikeln. Die Schwerpartikel setzen sich jeweils im Wesentlichen aus thermoplastischen Polymeren, insbesondere Polyethylen, Ethylen-Propylen-Dien-Kautschuk und/oder Ethylenvinylacetat, und mineralischen Füllstoffen, insbesondere Kalksteinmehl, Kalkspat und/oder Schwerspat, wie bereits eingangs beschrieben zusammen. Ein Teil der Schwerpartikel weist eine Siebgrösse auf, die einem Faktor grösser 1, insbesondere 1,5, der Dicke der herzustellenden Schallschutzschwerfolie entspricht. Der Teil der Schwerpartikel bildet eine Anteil von mindestens 25%, insbesondere mindestens 35%, im Speziellen mindestens 50% der Gesamtmasse der Schwerpartikel.

Die stückigen Schwerpartikel werden insbesondere aus einer neuen oder gebrauchten Schwerfolie durch Granulieren, Zerhacken oder Brechen der Schwerfolie hergestellt. In einer Weiterbildung der Erfindung werden die Schwerpartikel durch Zusatzpartikel aus einem Regenerat anderer Kunststoffe und/oder Faserstoffe und Granulaten und/oder Fasern und/oder Partikeln aus Kunststoff oder Naturstoffen wie Holzfasern mit und ohne Bindemittel ergänzt.

Die Schwerpartikel werden auf ein hitzebeständiges unteres Transportband zu einer flächigen Ausgangsschicht vorgegebener Höhe, insbesondere in einem Vorwärmabschnitt gleichmässig flächig aufgestreut. Die Ausgangsschicht wird mit einem hitzebeständigen oberen Transportband abgedeckt. Die Ausgangsschicht wird durch einen Heizabschnitt und einen Abkühlabschnitt mittels synchronen Bewegens des unteren Transportbandes und des oberen Transportbandes geführt. Der Abstand zwischen dem unteren Transportband und dem oberen Transportband wird zumindest im Heizabschnitt und im Abkühlabschnitt im Wesentlichen gleich der Dicke der fertigen Schallschutzschwerfolie gehalten.

Das Führen durch den Heizabschnitt und einen Abkühlabschnitt erfolgt derart, dass die Schwerpartikel einem vorgegebenen Druckbereich ausgesetzt werden und dass im Heizabschnitt ein nur teilweises Ineinanderfliessen und nur teilweises Untereinanderverschmelzen der Schwerpartikel erfolgt. Die aus dem Abkühlabschnitt geführte, abgekühlte Schicht bildet die Schallschutzschwerfolie, welche aufgrund der nur teilweise thermisch ineinander geflossenen und verpressten, untereinander nur teilverschmolzenen und durch die Teilverschmelzung untereinander Zwischenräume aufweisenden Schwerpartikeln eine poröse Beschaffenheit aufweist.

Die Prozessparameter, insbesondere die Temperaturen im Heizabschnitt und Abkühlabschnitt, der Druckbereich sowie die Fördergeschwindigkeit und -länge sind also derart gewählt, dass es nicht zu einer vollständigen Schmelze sondern nur zu einem teilweisen Schmelzen und teilweisen Ineinanderfliessen des Schwerpartikel kommt, wobei eine ausreichende Bindung zwischen den aufgeheizten Schwerpartikeln entsteht.

Überraschend wurde herausgefunden, dass die durch dieses Verfahren gewonnene poröse Schallschutzschwerfolie zahlreiche verbesserte Eigenschaften gegenüber einer mittels der bekannten Kalander- oder Extruderverfahren hergestellten Schwerfolie besitzt. Während die bekannten unbeschichteten Schwerfolien hauptsächlich schalldämmende, jedoch nur bedingt schalldämpfende Eigenschaften aufweisen, zeichnet sich die durch das erfindungsgemässe Verfahren gewonnene Schallschutzschwerfolie auch durch hervorragende Schallabsorptionseigenschaften aus. Die für eine Schwerfolie ungewöhnlich ausgeprägte Absorption des Luftschalls geschieht aufgrund der Porosität des offenporigen Materials, das eine grosse innere Oberfläche aufweist.

Mittels der erfindungsgemässen Verfahren ist es somit möglich, eine Schallschutzschwerfolie mit verbesserten Eigenschaften zur Verfügung zu stellen.

In einer Weiterbildung der Erfindung wird in einem weiteren Schritt eine weiche Federschicht aus Schaumstoff und/oder einem aufgeschäumten PUR-Kaltschaum und/oder einer Vliesplatine, insbesondere einer planen oder geformten Vliesplatine aus Baumwoll- oder Polyestervlies, auf die poröse Schallschutzschwerfolie aufgebracht.

Die erfindungsgemässe poröse Schallschutzschwerfolie, das erfindungsgemässe Schallschutzsystem und das erfindungsgemässe Verfahren werden nachfolgend anhand von in den Zeichnungen schematisch dargestellten konkreten Ausführungsbeispielen rein beispielhaft näher beschrieben. Im Einzelnen zeigen:
- Fig. 1: eine poröse Schallschutzschwerfolie aus Schwerpartikeln;
- Fig. 2: ein Schallschutzsystem aus einer porösen Schallschutzschwerfolie und einer weichen Federschicht; und
- Fig. 3: eine schematische Darstellung des Verfahrens zur Herstellung einer porösen Schallschutzschwerfolie aus Schwerpartikeln.

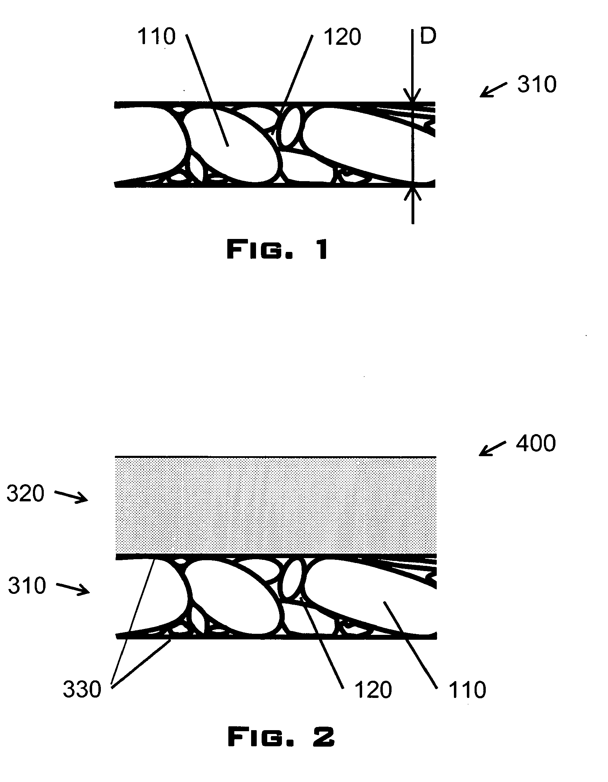

In Figur 1 ist eine poröse Schallschutzschwerfolie 310 rein schematisch dargestellt. Die poröse Schallschutzschwerfolie 310 setzt sich im Wesentlichen aus Schwerpartikeln 110 zusammen, die teilweise thermisch ineinander geflossen und verpresst sind, untereinander teilverschmolzen sind und somit aneinanderhaften. Da nur eine Teilverschmelzung und keine vollständige Verschmelzung untereinander erfolgt ist, bleiben Zwischenräume 120 zwischen den einzelnen Schwerpartikeln 110 bestehen. Die Schwerpartikel 110 setzen sich im Wesentlichen aus thermoplastischen Polymeren, insbesondere Polyethylen, Ethylen-Propylen-Dien-Kautschuk und/oder Ethylenvinylacetat, und mineralischen Füllstoffen, insbesondere Kalksteinmehl, Kalkspat und/oder Schwerspat, zusammensetzen. Da die Schwerpartikel nur teilweise verschmolzen sind, bleiben die Geometrie der Schwerpartikel insofern erhalten, als dass die Partikel als solche in der Schallschutzschwerfolie 310 erkennbar und bei einer Analyse voneinander trennbar sind. Ein gewisser Teil dieser teilverschmolzenen Schwerpartikel 110 besitzt mindestens eine bestimmte Partikelgrösse. Diese Partikelgrösse ist durch eine Siebgröße bestimmt, die einem Faktor grösser 0,5, insbesondere einem Faktor grösser 1, im Speziellen grösser 1,5 der Dicke D der porösen Schallschutzschwerfolie 310 entspricht. In anderen Worten heisst dies, dass die zur Herstellung der Schallschutzschwerfolie 310 verwendeten Schwerpartikel 110, die auch nach Herstellung in ihrer Geometrie erkennbar sind, bei einer Siebung mittels eines Siebs mit einer Siebgrösse, die mindestens dem Faktor 0,5, insbesondere 1, im Speziellen 1,5, der Dicke D der Schallschutzschwerfolie 310 entspricht, teilweise ausgesiebt werden. Dieser Gewichtsanteil der grossen, ausgesiebten Partikel beträgt mindestens 25%, insbesondere mindestens 35%, insbesondere mindestens 50%, im Speziellen mindestens 75% des Gesamtgewichts aller Schwerpartikel 110 der Schallschutzschwerfolie 310.

Die Schwerpartikel 110 sind entweder eigens für die Schallschutzschwerfolie 310 hergestellt oder werden von einem Rezyklat einer Kunststoffschwerfolie gebildet. Die Grösse der Schwerpartikel 110, deren geometrische Form und die Verteilung der Partikelgrösse bei der Herstellung der Schallschutzschwerfolie 310 gesteuert sind, liegt insbesondere zwischen einer Siebgröße von 0 mm bis 15 mm. Die Schwerpartikel 110 sind mittels Granulieren, Zerhacken, Brechen oder einem sonstigen Verfahren stückig hergestellt. In einer Weiterbildung sind die Schwerpartikel 110 zumindest teilweise durch Zusatzpartikel aus Regenerat anderer Kunststoffe und/oder Faserstoffe und/oder Granulaten und/oder Fasern und/oder Partikeln aus Kunststoff oder Naturstoffen wie Holzfasern mit und ohne Bindemittel ergänzt. In einer Weiterbildung ist die poröse Schallschutzschwerfolie 310 ein-oder beidseitig mit luftdurchlässigem Vliesmaterial 330 kaschiert, wie dies in Figur 2 in Form einer beidseitigen Vlieskaschierung gezeigt ist.

Figur 2 zeigt das erfindungsgemässe Schallschutzsystem 400 aus der porösen Schallschutzschwerfolie 310 und einer mit der Schallschutzschwerfolie 310 verbundenen weichen schallabsorbierende Federschicht 320. Das Schallschutzsystem 400 hat schallabsorbierende Eigenschaften. Die weiche Federschicht 320 besteht insbesondere im Wesentlichen aus Schaumstoff und/oder einem aufgeschäumten PUR-Kaltschaum und/oder einer Vliesplatine, insbesondere einer planen oder geformten Vliesplatine aus Baumwoll- oder Polyestervlies. Es ist möglich, mehrere gleiche oder unterschiedliche Federschicht 320 aufzubringen und sandwichartig anzuordnen. Das gesamte Schallschutzsystem 400 ist insbesondere als plane Matte zu einer planen Platte verdichtet oder in einer Form zu einem passgenauen Formteil eingebracht und ausgeformt. Die Anordnung von Zusammensetzung und Aufbau ist vorzugsweise nach Ansprüchen der akustischen Optimierung erfolgt.

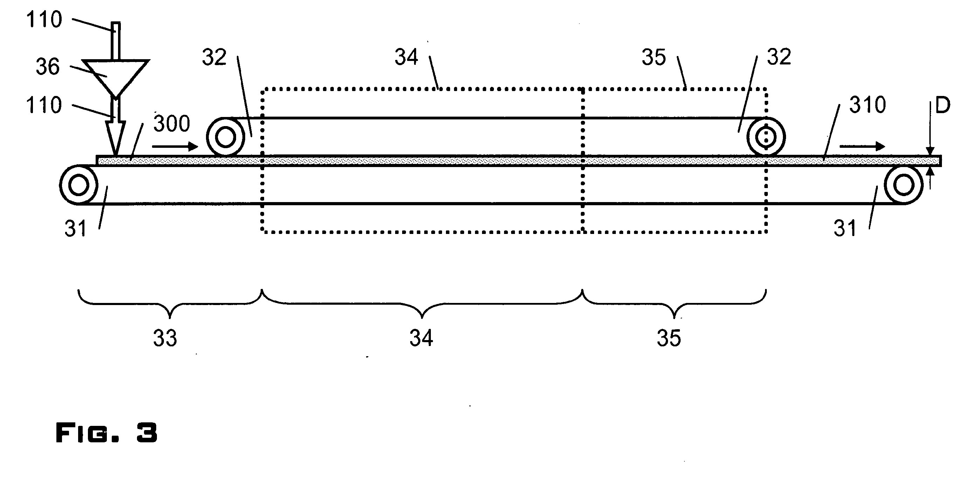

Figur 3 veranschaulicht das Verfahren zur Herstellung der porösen Schallschutzschwerfolie 310 aus insbesondere von einem Schwerfoliengranulat gebildeten Schwerpartikeln 110 anhand einer Vorrichtung zur Herstellung der Schallschutzschwerfolie 310.

Die Vorrichtung umfasst ein hitzebeständiges unteres Transportband 31 und ein sich in beabstandeter Gegenüberlage oberhalb des unteren Transportbands 31 befindliches hitzebeständiges, kürzeres oberes Transportband 32. Die Vorrichtung besitzt einen optionalen Vorwärmabschnitt 33, einen Heizabschnitt 34 und einen Abkühlabschnitt 35, wobei sich das untere Transportband 31 über alle drei Abschnitte und das obere Transportband 32 im Wesentlichen nur über den Heizabschnitt 34 und den Abkühlabschnitt 35 erstreckt. Im Vorwärmabschnitt 33 ist oberhalb des unteren Transportbandes 31 in einem nicht von dem oberen Transportband 32 abgedeckten Bereich ein Streuer 36 zum gleichmässig flächigen Aufstreuen eines Streuguts auf das untere Transportband 31 vorgesehen. Der genaue Aufbau der Vorrichtung ist in der EP 1 045 751 B1 und der DE 197 51 516 A1 detailliert beschrieben.

Die Schwerpartikel 110 werden mittels des Streuers 36 in dem Vorwärmabschnitt 33 gleichmässig flächig auf das hitzebeständige untere Transportband 31 zu einer flächigen Ausgangsschicht 300 vorgegebener Höhe aufgestreut. Die Ausgangsschicht 300 wird mit dem hitzebeständigen oberen Transportband 32 abgedeckt. Die Ausgangsschicht 300 wird durch den Heizabschnitt 34 und den Abkühlabschnitt 35 mittels synchronen Bewegens des unteren Transportbandes 31 und des oberen Transportbandes 32 geführt. Hierbei wird der Abstand zwischen dem unteren Transportband 31 und dem oberen Transportband 32 im Heizabschnitt 34 und im Abkühlabschnitt 35 im Wesentlichen gleich der Dicke D der fertigen Schallschutzschwerfolie 310 gehalten, so dass das Schwerfolien-Granulat 110 einem vorgegebenen Druckbereich ausgesetzt ist.

Insbesondere der Druckbereich, die Temperatur im Heizabschnitt 34 und die Fördergeschwindigkeit sind derart gewählt, dass im Heizabschnitt 34 ein nur teilweises Ineinanderfliessen und Untereinanderverschmelzen der Schwerpartikel 110 erfolgt, so dass die aus dem Abkühlabschnitt 35 geführte Schicht die eine poröse Beschaffenheit aufweisende Schallschutzschwerfolie 310 bildet. Die sich durch die aufgestreuten Schwerpartikel ergebende poröse Struktur bleibt zum Teil erhalten, wodurch die beschriebenen verbesserten Eigenschaften der Schallschutzschwerfolie 310 erreicht werden.

In anderen Worten werden die Prozessparameter, insbesondere die Streudichte und Streuhöhe beim Aufstreuen der Schwerpartikel, die Fördergeschwindigkeit durch den Heizabschnitt sowie der Druckbereich und die Temperatur im Heizabschnitt derart gesteuert, dass die Schwerpartikel nur teilweise thermisch ineinander fliessen und verpresst werden, untereinander nur teilweise verschmelzen, durch die teilweise Verschmelzung aber derart aneinanderhaften, dass die Schwerpartikel gemeinsam eine zusammenhaltende Folie, insbesondere eine flexible Platte, bilden und durch die nur teilweise erfolgte Verschmelzung untereinander Zwischenräume, welche die Porosität erzeugen, aufweisen.

## Patentansprüche

1. Poröse Schallschutzschwerfolie (310) aus Schwerpartikeln (110), die sich jeweils im Wesentlichen aus
• thermoplastischen Polymeren, insbesondere Polyethylen, Ethylen-Propylen-Dien-Kautschuk und/oder Ethylenvinylacetat, und
• mineralischen Füllstoffen, insbesondere Kalksteinmehl, Kalkspat und/oder Schwerspat,
zusammensetzen, wobei ein Teil der Schwerpartikel (110) eine Siebgröße aufweist, die einem Faktor grösser 0,5 der Dicke (D) der porösen Schallschutzschwerfolie (310) entspricht, **dadurch gekennzeichnet, dass**
die Schwerpartikel (110)
• teilweise thermisch ineinander geflossen und verpresst sind,
• untereinander teilverschmolzen, somit aneinanderhaftend sind und
• durch die Teilverschmelzung untereinander Zwischenräume (120) aufweisen.

2. Poröse Schallschutzschwerfolie (310) nach Anspruch 1, wobei
der Teil der teilverschmolzenen Schwerpartikel (110) eine Siebgröße aufweist, die einem Faktor grösser 1, insbesondere grösser 1,5 der Dicke (D) der porösen Schallschutzschwerfolie (310) entspricht.

3. Poröse Schallschutzschwerfolie (310) nach Anspruch 1 oder 2, wobei
der Teil der Schwerpartikel (110) einen Anteil von mindestens 25%, insbesondere mindestens 35%, insbesondere mindestens 50%, im Speziellen mindesten 75% der Gesamtmasse der Schwerpartikel (110) bildet.

4. Poröse Schallschutzschwerfolie (310) nach einem der Ansprüche 1 bis 3, wobei
die Schwerpartikel (110) von einem Rezyklat einer Kunststoffschwerfolie gebildet werden.

5. Poröse Schallschutzschwerfolie (310) nach einem der Ansprüche 1 bis 4, wobei
die Grösse der Schwerpartikel (110), deren geometrische Form und die Verteilung der Partikelgrösse bei der Herstellung der Schallschutzschwerfolie (310) gesteuert sind, zwischen einer Siebgröße von 0 mm und 15 mm liegt.

6. Poröse Schallschutzschwerfolie (310) nach einem der Ansprüche 1 bis 5, wobei
die Schwerpartikel (110) mittels Granulieren, Zerhacken oder Brechen stückig hergestellt sind.

7. Poröse Schallschutzschwerfolie (310) nach einem der Ansprüche 1 bis 6, wobei
die Schwerpartikel (110) zumindest teilweise durch Zusatzpartikel aus
• Regenerat anderer Kunststoffe und/oder Faserstoffe und
• Granulaten und/oder Fasern und/oder Partikeln aus Kunststoff oder Naturstoffen wie Holzfasern
mit und ohne Bindemittel ergänzt sind.

8. Poröse Schallschutzschwerfolie (310) nach einem der Ansprüche 1 bis 7, wobei
die poröse Schallschutzschwerfolie (310) ein- oder beidseitig mit luftdurchlässigem Vliesmaterial (330) kaschiert ist.

9. Planes oder verformtes Schallschutzsystem (400) aus
• einer porösen Schallschutzschwerfolie (310) nach einem der Ansprüche 1 bis 8 und
• einer mit der Schallschutzschwerfolie (310) verbundenen weichen Federschicht (320),
wobei das Schallschutzsystem (400) schallabsorbierende Eigenschaften aufweist.

10. Schallschutzsystem (400) nach Anspruch 9, wobei die weiche Federschicht (320) im Wesentlichen aus
• Schaumstoff und/oder
• einem aufgeschäumten PUR-Kaltschaum und/oder
• einer Vliesplatine, insbesondere einer planen oder geformten Vliesplatine aus Baumwoll- oder Polyestervlies,
besteht.

11. Schallschutzsystem (400) nach Anspruch 9 oder 10, wobei das gesamte Schallschutzsystem (400) als plane Matte zu einer planen Platte verdichtet ist.

12. Schallschutzsystem (400) nach einem der Ansprüche 9 bis 11, wobei
das gesamte Schallschutzsystem (400) in einer Form zu einem passgenauen Formteil eingebracht und ausgeformt ist.

13. Schallschutzsystem (400) nach einem der Ansprüche 9 bis 12, wobei
die Anordnung von Zusammensetzung und Aufbau nach Ansprüchen der akustischen Optimierung erfolgt ist.

14. Verfahren zur Herstellung einer porösen Schallschutzschwerfolie (310) aus - insbesondere von einem Schwerfoliengranulat gebildeten - Schwerpartikeln (110), die sich jeweils im Wesentlichen aus
• thermoplastischen Polymeren, insbesondere Polyethylen, Ethylen-Propylen-Dien-Kautschuk und/oder Ethylenvinylacetat, und
• mineralischen Füllstoffen, insbesondere Kalksteinmehl, Kalkspat und/oder Schwerspat,
zusammensetzen, wobei ein Teil der Schwerpartikel (110) eine Siebgrösse aufweist, die einem Faktor grösser 0,5 der Dicke (D) der herzustellenden Schallschutzschwerfolie (310) entspricht,
mit den Schritten
• gleichmässig flächiges Aufstreuen der Schwerpartikel (110) auf ein hitzebeständiges unteres Transportband (31) zu einer flächigen Ausgangsschicht (300) vorgegebener Höhe, insbesondere in einem Vorwärmabschnitt (33),
• Abdecken der Ausgangsschicht (300) mit einem hitzebeständigen oberen Transportband (32),
• derartiges Führen der Ausgangsschicht (300) durch
□ einen Heizabschnitt (34) und
□einen Abkühlabschnitt (35)
mittels synchronen Bewegens des unteren Transportbandes (31) und des oberen Transportbandes (32), wobei
□ der Abstand zwischen dem unteren Transportband (31) und dem oberen Transportband (32) im Heizabschnitt (34) und im Abkühlabschnitt (35) im Wesentlichen gleich der Dicke (D) der fertigen Schallschutzschwerfolie (310) gehalten wird, so dass die Schwerpartikel (110) einem vorgegebenen Druckbereich ausgesetzt sind,
dass im Heizabschnitt (34) ein nur teilweises Ineinanderfliessen und Untereinanderverschmelzen der Schwerpartikel (110) erfolgt, so dass die aus dem Abkühlabschnitt (35) geführte Schicht die eine poröse Beschaffenheit aufweisende Schallschutzschwerfolie (310) bildet, deren teilverschmolzener Schwerpartikel (110) untereinander die Porosität bildende Zwischenräume (120) aufweisen.

15. Verfahren nach Anspruch 14, wobei
der Teil der teilverschmolzenen Schwerpartikel (110) eine Siebgröße aufweist, die einem Faktor grösser 1, insbesondere grösser 1,5 der Dicke (D) der porösen Schallschutzschwerfolie (310) entspricht.

16. Verfahren nach Anspruch 14 oder 15, wobei
der Teil der Schwerpartikel (110) einen Anteil von mindestens 25%, insbesondere mindestens 35%, insbesondere mindestens 50%, im Speziellen mindesten 75% der Gesamtmasse der Schwerpartikel (110) bildet.

17. Verfahren nach einem der Ansprüche 14 bis 16, mit dem vorausgehenden Schritt
• Herstellen der stückigen Schwerpartikel (110) aus einer Schwerfolie durch Granulieren, Zerhacken oder Brechen der Schwerfolie.

18. Verfahren nach Anspruch 17, mit dem nach dem Herstellen der stückigen Schwerpartikel (110) erfolgenden Schritt
• Ergänzen der Schwerpartikel (110) durch Zusatzpartikel aus
• einem Regenerat anderer Kunststoffe und/oder Faserstoffe und
• Granulaten und/oder Fasern und/oder Partikeln aus Kunststoff oder Naturstoffen wie Holzfasern
mit und ohne Bindemittel.

19. Verfahren nach einem der Ansprüche 14 bis 18, mit dem weiteren Schritt
• Aufbringen einer weichen Federschicht (320) aus
• Schaumstoff und/oder
• einem aufgeschäumten PUR-Kaltschaum und/oder
• einer Vliesplatine, insbesondere einer planen oder geformten Vliesplatine aus Baumwoll- oder Polyestervlies,
auf die Schallschutzschwerfolie (310).

## Claims

1. Porous high-weight sound-deadening foil (310) made of high-weight particles (110), where these respectively consist essentially of
• thermoplastic polymers, in particular polyethylene, ethylene-propylene-diene rubber and/or ethylenevinyl acetate, and
• mineral fillers, in particular ground limestone, calcite and/or barite,
where a portion of the high-weight particles (110) has a sieve size which corresponds to a factor greater than 0.5 times the thickness (D) of the porous high-weight sound-deadening foil (310),
**characterized in that**
the high-weight particles (110)
• have to some extent undergone thermal coalescence and pressing,
• have been partially fused to one another, and therefore adhere to one another and
• by virtue of the partial fusion have interstices (120) between them.

2. Porous high-weight sound-deadening foil (310) according to Claim 1,
where
the portion of the partially fused high-weight particles (110) has a sieve size which corresponds to a factor greater than 1, in particular greater than 1.5, times the thickness (D) of the porous high-weight sound-deadening foil (310).

3. Porous high-weight sound-deadening foil (310) according to Claim 1 or 2, where
the portion of the high-weight particles (110) forms a proportion of at least 25%, in particular at least 35%, in particular at least 50%, specifically at least 75%, of the total mass of the high-weight particles (110).

4. Porous high-weight sound-deadening foil (310) according to any one of Claims 1 to 3, where
the high-weight particles (110) are formed by a recyclate of a high-weight plastics foil.

5. Porous high-weight sound-deadening foil (310) according to any one of Claims 1 to 4, where
the size of the high-weight particles (110), the geometric shape of these, and the distribution of the particle size have been controlled during the production of the high-weight sound-deadening foil (310) between a sieve size of 0 mm and 15 mm.

6. Porous high-weight sound-deadening foil (310) according to any one of Claims 1 to 5, where
the high-weight particles (110) have been produced in the form of fragments by means of granulation, chopping or breaking.

7. Porous high-weight sound-deadening foil (310) according to any one of Claims 1 to 6, where
the high-weight particles (110) have at least to some extent been supplemented by additional particles made of
• regrind of other plastics and/or fibre materials and
• granules and/or fibres and/or particles made of plastic or natural substances, e.g. wood fibres
with or without binder.

8. Porous high-weight sound-deadening foil (310) according to any one of Claims 1 to 7, where air-permeable non-woven material (330) has been laminated to one or both sides of the porous high-weight sound-deadening foil (310).

9. Flat or shaped sound-deadening system (400) made of
• a porous high-weight sound-deadening foil (310) according to any of Claims 1 to 8 and
• a soft cushioning layer (320) bonded to the highweight sound-deadening foil (310),
where the sound-deadening system (400) has sound-absorbing properties.

10. Sound-deadening system (400) according to Claim 9, where the soft cushioning layer (320) consists essentially of
• foam and/or
• a cold-cure PU foam and/or
• a non-woven lamina, in particular a flat or shaped non-woven lamina made of cotton non-woven or of polyester non-woven.

11. Sound-deadening system (400) according to Claim 9 or 10, where the entire sound-deadening system (400) has been compacted in the form of flat mat to give a flat sheet.

12. Sound-deadening system (400) according to any one of Claims 9 to 11, where
the entire sound-deadening system (400) has been introduced and moulded within a mould to give a precisely fitting moulding.

13. Sound-deadening system (400) according to any one of Claims 9 to 12, where
the arrangement of composition and structure has depended on the acoustic optimization requirements.

14. Process for producing a porous high-weight sound-deadening foil (310) made of high-weight particles (110) - in particular formed from granulated high-weight foil, where these respectively consist essentially of
• thermoplastic polymers, in particular polyethylene, ethylene-propylene-diene rubber and/or ethylenevinyl acetate, and
• mineral fillers, in particular ground limestone, calcite and/or barite,
where a portion of the high-weight particles (110) has a sieve size which corresponds to a factor greater than 0.5 times the thickness (D) of the high-weight sound-deadening foil (310) to be produced, with the following steps:
• uniform application of the high-weight particles (110) by scattering over an area onto a heat-resistant lower conveyor belt (31) to give an area of initial layer (300) of predefined thickness, in particular in a preheat section (33),
• covering of the initial layer (300) with a heat-resistant upper conveyor belt (32),
• passing the initial layer (300) through
□ a heating section (34) and
□ a cooling section (35)
by means of synchronous movement of the lower conveyor belt (31) and of the upper conveyor belt (32), where
□ the distance between the lower conveyor belt (31) and the upper conveyor belt (32) in the heating section (34) and in the cooling section (35) is in essence the same as the thickness (D) of the finished high-weight sound-deadening foil (310), so that the high-weight particles (110) have been exposed to a prescribed pressure range,
where, in the heating section (34) only partial coalescence and fusion of the high-weight particles (110) with one another takes place, and the layer conducted out of the cooling section (35) forms the porous high-weight sound-deadening foil (310), the partially fused high-weight particles (110) of which have, between them, the interstices (120) providing the porosity.

15. Process according to Claim 14, where the portion of the partially fused high-weight particles (110) has a sieve size which corresponds to a factor greater than 1, in particular greater than 1.5, times the thickness (D) of the porous high-weight sound-deadening foil (310).

16. Process according to Claim 14 or 15, where the portion of the high-weight particles (110) forms a proportion of at least 25%, in particular at least 35%, in particular at least 50%, specifically at least 75%, of the total mass of the high-weight particles (110).

17. Process according to any one of Claims 14 to 16, with the preceding step of
• production of the fragments of high-weight particles (110) from a high-weight foil via granulation, chopping or breaking of the high-weight foil.

18. Process according to Claim 17, with the following step taking place after the production of the fragments of high-weight particles (110):
• supplementation of the high-weight particles (110) via additional particles made of
□ a regrind of other plastics and/or fibre materials and
□ granules and/or fibres and/or particles made of plastic or natural substances, e.g. wood fibres
with or without binder.

19. Process according to any one of Claims 14 to 18, with the further step of
• application, to the high-weight sound-deadening foil (310), of a soft cushioning layer (320) made of
□ foam and/or
□ a cold-cure PU foam and/or
□ a non-woven lamina, in particular a flat or shaped non-woven lamina made of cotton non-woven or of polyester non-woven.

## Revendications

1. Feuille pesante de protection sonore (310) poreuse, composée de particules lourdes (110), composées chacune essentiellement
• de polymères thermoplastiques, en particulier de polyéthylènes, caoutchouc éthylène-propylène-diène et/ou éthylène-acétate de vinyle, et
• de charges minérales, en particulier de calcaire pulvérisé, spath calcaire et/ou spath pesant,
une partie des particules lourdes (110) présentant une taille de particule correspondant à un facteur supérieur à 0,5 fois l'épaisseur (D) de la feuille pesante de protection sonore (310) poreuse, **caractérisée en ce que**
les particules lourdes (110)
• sont partiellement thermiquement filées les unes en les autres et pressées,
• sont fondues partiellement entre elles, en étant ainsi en adhésion les unes aux autres, et,
• du fait de la fusion partielle entre elles, présentent des espaces intermédiaires (120).

2. Feuille pesante de protection sonore (310) poreuse selon la revendication 1, dans laquelle
la partie des particules lourdes (110) partiellement fondues présente une taille de particule correspondant à un facteur supérieur à 1, en particulier supérieur à 1,5 fois l'épaisseur (D) de la feuille pesante de protection sonore (310) poreuse.

3. Feuille pesante de protection sonore (310) poreuse selon la revendication 1 ou 2, dans laquelle
la partie des particules lourdes (110) forme une proportion d'au moins 25 %, en particulier d'au moins 35 %, en particulier d'au moins 50 %, spécialement d'au moins 75 % de la masse totale des particules lourdes (110).

4. Feuille pesante de protection sonore (310) poreuse selon l'une quelconque des revendications 1 à 3, dans laquelle les particules lourdes (110) sont formées par un recyclat d'une feuille pesante de matière synthétique.

5. Feuille pesante de protection sonore (310) poreuse selon l'une quelconque des revendications 1 à 4, dans laquelle la grosseur des particules lourdes (110), dont la forme géométrique et la distribution de la taille de particule sont commandées lors de la fabrication de la feuille pesante de protection sonore (310), est située dans la fourchette entre une taille de particule de 0 mm et 15 mm.

6. Feuille pesante de protection sonore (310) poreuse selon l'une quelconque des revendications 1 à 5, dans laquelle les particules lourdes (110) sont fabriquées en morceaux, par granulation, exposition à des vibrations ou concassage.

7. Feuille pesante de protection sonore (310) poreuse selon l'une quelconque des revendications 1 à 6, dans laquelle
les particules lourdes (110) sont complétées au moins partiellement par des particules d'appoint composées
• d'un régénérat d'autres matières synthétiques et/ou substances fibreuses, et
• de granulats et/ou de fibres et/ou de particules composées de matière synthétique ou de substances naturelles, telles que des fibres de bois,
avec et sans liant.

8. Feuille pesante de protection sonore (310) poreuse selon l'une quelconque des revendications 1 à 7, dans laquelle
la feuille pesante de protection sonore (310) poreuse est scellée, sur une ou sur les deux faces, avec un matériau non tissé (330) perméable à l'air.

9. Système d'insonorisation (400) plan ou déformé, composé :
• d'une feuille pesante de protection sonore (310) poreuse selon l'une des revendications 1 à 8, et
• d'une couche élastique (320) souple, reliée à la feuille pesante de protection sonore (310) poreuse,
le système d'insonorisation (400) présentant des propriétés d'absorption du bruit.

10. Système d'insonorisation (400) selon la revendication 9, dans lequel la couche élastique (320) souple est essentiellement composée
• de matériau alvéolaire et/ou
• d'une mousse à froid de PUR rendue alvéolaire et/ou
• d'une platine de non tissé, en particulier d'une platine de non tissé, plane ou formée, en non tissé de coton ou de polyester.

11. Système d'insonorisation (400) selon la revendication 9 ou 10, dans lequel l'ensemble du système d'insonorisation (400) est compacté sous forme de tapis plan ou d'une plaque plane.

12. Système d'insonorisation (400) selon l'une des revendications 9 à 11 , dans lequel l'ensemble du système d'insonorisation (400) est introduit dans un moule pour donner une pièce de forme ayant une précision d'ajustage et démoulé.

13. Système d'insonorisation (400) selon l'une des revendications 9 à 12, dans lequel l'agencement de la composition et de la structure s'effectue selon des exigences de l'optimisation acoustique.

14. Procédé de fabrication d'une feuille pesante de protection sonore (310) poreuse composée de particules lourdes (110) - en particulier formées par un granulat de feuille pesante - se composant chacune essentiellement de :
• polymères thermoplastiques, en particulier de polyéthylène, caoutchouc éthylène-propylène-diène et/ou d'éthylène-acétate de vinyle, et
• de charges minérales, en particulier de calcaire pulvérisé, spath calcaire et/ou spath pesant,
une partie des particules lourdes (110) présentant une taille de particule correspondant à un facteur supérieur à 0,5 fois l'épaisseur (D) de la feuille pesante de protection sonore (310) poreuse,
avec les étapes consistant à :
• répandre en dispersion, régulièrement sur la surface, les particules lourdes (110) sur une bande transporteuse inférieure (31) résistant à la chaleur, pour former une couche initiale (300) plate, de hauteur prédétermine, en particulier dans un tronçon de préchauffage (33)
• couvrir la couche initiale (300) d'une bande transporteuse supérieure (32) résistant à la chaleur,
• guider la couche initiale (300) à travers
• un tronçon de chauffage (34), et
• un tronçon de refroidissement (35),
par un déplacement synchrone de la bande transporteuse inférieure (31) et de la bande transporteuse supérieure (32), où
• l'espacement entre la bande transporteuse inférieure (31) et la bande transporteuse supérieure (32), dans le tronçons de chauffage (34) et dans le tronçon de refroidissement (35), est maintenu sensiblement égal à l'épaisseur (D) de la feuille pesante de protection sonore (310) achevée, de manière que les particules lourdes (110) soient exposées à une zone de pression prédéterminée,
en ce que, dans le tronçon de chauffage (34), s'effectue un filage seulement partiel les unes en les autres et une fusion seulement partielle entre elles des particules lourdes (110), de manière que la couche, guidée à partir du tronçon de refroidissement (35), forme la feuille pesante de protection sonore (310) présentant un état poreux, dont les particules lourdes (110) partiellement fondues présentent entre elles des espaces intermédiaires (120) formant la porosité.

15. Procédé selon la revendication 14, dans lequel la partie des particules lourdes (110) partiellement fondues présente une taille de particule correspondant à un facteur supérieur à 1, en particulier supérieur à 1,5 fois l'épaisseur (D) de la feuille pesante de protection sonore (310) poreuse.

16. Procédé selon la revendication 14 ou 15, dans lequel la partie des particules lourdes (110) forme une proportion d'au moins 25 %, en particulier d'au moins 35 %, en particulier d'au moins 50 %, spécialement d'au moins 75 % de la masse totale des particules lourdes (110).

17. Procédé selon l'une des revendications 14 à 16, avec l'étape préliminaire consistant à :
• fabrication des particules lourdes (110) en morceaux à partir d'une feuille pesante, par granulation, exposition à des vibrations ou concassage.

18. Procédé selon la revendication 17, avec l'étape s'effectuant après la fabrication des particules lourdes (110) en morceaux, consistant à :
• compléter les particules lourdes (110) par des particules d'appoint composées
• d'un régénérat d'autres matières synthétiques et/ou substances fibreuses, et
• de granulats et/ou de fibres et/ou de particules composées de matière synthétique ou de substances naturelles, telles que des fibres de bois,
avec et sans liant.

19. Procédé selon l'une des revendications 14 à 18, comprenant l'étape supplémentaire consistant à :
• appliquer une couche élastique (320) souple composée :
• de matériau alvéolaire et/ou
• d'une mousse à froid de PUR rendue alvéolaire et/ou
• d'une platine de non tissé, en particulier d'une platine de non tissé, plane ou déformée, en non tissé de coton ou de polyester,
sur la feuille pesante de protection sonore (310).
